# EUROPEAN PATENT APPLICATION

(11) **EP 4 040 572 A1**
(43) Date of publication of application: **10.08.2022**
(21) Application number: 22154243.4
(22) Date of filing: 31.01.2022
(51) Int. Cl.: H01M 10/613, H01M 10/6553, H01M 50/209, H01M 50/211, H01M 50/54, H01M 50/557

(54) **BATTERY PACK**

(30) Priority: 08.02.2021 JP 2021018120
(71) Applicant: Prime Planet Energy & Solutions, Inc., Chuo-ku Tokyo 103-0022 (JP)
(72) Inventor: KATO, Masashi, Tokyo, 103-0022 (JP)
(74) Representative: Kuhnen & Wacker Patent- und Rechtsanwaltsbüro PartG mbB

(57) **Abstract**

Provided is a battery pack in which battery performance can be suitably maintained. In the embodiment of the battery pack disclosed herein includes a stacked body in which a plurality of unit cells is stacked along a predetermined stacking direction, and a housing accommodating the stacked body. A heat radiating member having an insulating property and thermal conductivity is arranged on an inner wall of the housing in contact with the inner wall of the housing. Here, a positive-negative electrode terminal joint in which a positive electrode terminal of one unit cell and a negative electrode terminal of the other unit cell are joined to each other is present between the unit cells adjacent in the stacking direction, and the positive-negative electrode terminal joints are in contact with the heat radiating member.

## Description

### BACKGROUND

The present disclosure relates to a battery pack.

A battery pack including a plurality of unit cells, each unit cell being a secondary battery such as a lithium ion secondary battery or a nickel hydrogen battery, or a power storage element such as a capacitor, is gaining importance as a power source to be mounted on a vehicle or a power source for a personal computer or a mobile terminal. In particular, a battery pack using a lithium ion secondary battery, which is lightweight and has a high energy density, as a unit cell is preferably used as a high-output power source to be mounted on a vehicle.

Such a battery pack typically includes a stacked body obtained by stacking a plurality of unit cells in a predetermined stacking direction and a housing in which the stacked body is accommodated, and the battery pack is constructed by electrically connecting the unit cells adjacent in the stacking direction via electrode terminals. For example, Japanese Translation of PCT Application No. 2019-508846 and Japanese Patent Application Publication No. 2013-164975 disclose a battery pack having such a configuration.

### SUMMARY

In a battery pack used as a power source for mounting on a vehicle or the like, socalled high-rate charging/discharging is often performed in which a large current is charged/discharged in a short time. It is known that such high-rate charging/discharging causes power concentration at electrode terminals and the like, and the temperature of an electrode body tends to rise. Such an increase in the temperature of the electrode body is undesirable because the performance of the battery pack may be degraded.

The present disclosure has been made in view of such circumstances, and a main object thereof is to provide a battery pack in which battery performance can be suitably maintained. For example, Japanese Translation of PCT Application No. 2019-508846 indicates that heat generated from an electrode body is dissipated in the order of an exterior material accommodating the electrode body, a heat conductive adhesive, and a housing, but there is no disclosure of contents related to direct removal of heat from electrode terminals.

In order to achieve such an object, the present disclosure provides a battery pack including a stacked body in which a plurality of unit cells is stacked along a predetermined stacking direction, and a housing accommodating the stacked body.

The unit cell includes an electrode body including a first electrode which is either a positive electrode or a negative electrode, and a second electrode which is a counter electrode of the first electrode, and an exterior body accommodating the electrode body. A first electrode terminal and a second electrode terminal electrically connected to the first electrode and the second electrode, respectively, are arranged outside the exterior body, and a heat radiating member having an insulating property and thermal conductivity is arranged on an inner wall of the housing in contact with the inner wall of the housing. Here, an electrode terminal joint in which either the first electrode terminal or the second electrode terminal of one unit cell is joined to either the first electrode terminal or the second electrode of the other unit cell is present between the unit cells adjacent in the stacking direction, and the electrode terminal joints are in contact with the heat radiating member.

In the battery pack having such a configuration, the heat generated from the electrode terminal joints where power concentration tends to occur can be efficiently dissipated through the heat radiating member and the housing. As a result, the temperature rise of the electrode body can be suitably suppressed, such that the battery performance can be suitably maintained. Further, since the electrode terminal joint is physically in contact with the housing with the heat radiating member interposed therebetween, the resonance frequency of the electrode terminal joint is raised, such that a battery pack having high vibration resistance can be obtained.

In a preferred embodiment of the battery pack disclosed herein, the exterior body has a pair of rectangular wide surfaces, the first electrode terminal is arranged on one short side or long side of the wide surface, and the second electrode terminal is arranged on the side facing the one short side or long side.

A battery pack including unit cells having such a configuration is preferable because the heat generated from the electrode terminal joints can be efficiently dissipated from both sides of the housing.

In a preferred embodiment of the battery pack disclosed herein, the heat radiating member includes a resin matrix having an insulating property and a filler member having a thermal conductivity. Since the heat radiating member having such a configuration is excellent in thermal conductivity, the heat generated from the electrode terminal joints can be more efficiently dissipated through the heat radiating member and the housing. Further, a heat radiating member in which the resin matrix includes a silicone resin and the filler member includes alumina can be preferably used.

In a preferred embodiment of the battery pack disclosed herein, the housing is configured of aluminum or an alloy mainly composed of aluminum.

Since the housing made of aluminum or an alloy mainly composed of aluminum has excellent heat radiation property, the heat generated from the electrode terminal joints can be dissipated more efficiently through the housing.

In a preferred embodiment of the battery pack disclosed herein, a heat exchanger is provided on the outer side of the inner wall on which the heat radiating member is arranged in the housing.

According to this configuration, the heat generated from the electrode terminal joints can be dissipated more efficiently via the heat radiating member, the housing, and the heat exchanger.

In a preferred embodiment of the battery pack disclosed herein, the exterior body is made of a laminated film.

When the exterior body is made of a laminated film, the first electrode terminal and the second electrode terminal are typically welded to the laminated film via a welding film configured of a resin material or the like. Such a welded portion may be opened due to the influence of heat generated from the electrode terminal joint. Therefore, an exterior body made of a laminated film is suitable as a target to which such a technique is to be applied.

### BRIEF DESCRIPTION OF THE DRAWINGS

FIG. 1 is a schematic diagram for explaining the main configuration of a battery pack according to one embodiment;
FIG. 2 is a plan view schematically showing the configuration of a unit cell included in the battery pack according to FIG. 1;
FIG. 3 is a schematic diagram for explaining the configuration of the stacked body included in the battery pack according to FIG. 1; and
FIG. 4 is a schematic diagram for explaining the main configuration of the battery pack according to a modification example.

### DETAILED DESCRIPTION

Hereinafter, a preferred embodiment of the battery pack disclosed herein will be described in detail with reference to the drawings as appropriate. Matters other than those specifically mentioned in the present description and necessary for implementation can be ascertained as design matters for a person skilled in the art based on the prior art in the art. The present disclosure can be carried out based on the contents disclosed in the present description and common technical knowledge in the art. The following embodiments are not intended to limit the technique disclosed herein. Further, in the drawings shown in the present description, members and parts having the same action are denoted by the same reference symbols. Furthermore, the dimensional relationships (length, width, thickness, etc.) in each drawing do not reflect the actual dimensional relationships.

In the present description, the term "battery" generally refers to a power storage device capable of extracting electric energy, and is a concept inclusive of a primary battery and a secondary battery. The "secondary battery" refers to a general power storage device that can be repeatedly charged and discharged.

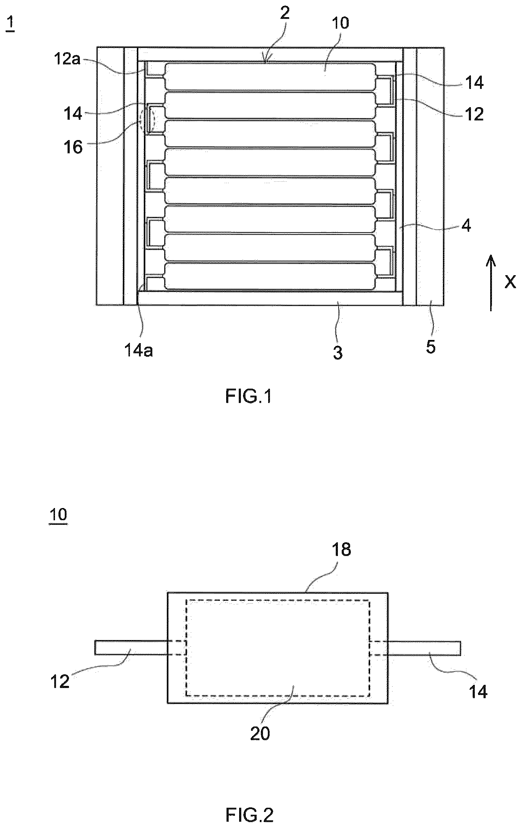

FIG. 1 is a schematic diagram for explaining the main configuration of a battery pack 1 according to an embodiment. As shown in FIG. 1, the battery pack 1 according to the present embodiment generally includes a stacked body 2, a housing 3 that accommodates the stacked body, a heat radiating member 4, and a heat exchanger 5. Hereinafter, each component will be described in detail. In the following description, a mode in which the unit cells 10 are connected in series will be described, but this mode is not intended to be limiting. The technique disclosed herein can also be applied when the cells 10 are connected in parallel.

### Stacked Body 2

As shown in FIG. 1, the stacked body 2 according to the present embodiment has a configuration in which a plurality of (here, eight) unit cells 10 is stacked along a stacking direction X. First, the unit cell 10 constituting the stacked body 2 will be described with reference to FIG. 2. In the case described hereinbelow, an exterior body 18 included in the unit cell 10 is made of a laminated film, and the electrode body 20 is a laminated electrode body, but the exterior body and the electrode body are not intended to be limited to such types. The technique disclosed herein can also be applied, for example, when the exterior body is a metal battery case having a hexahedral box shape or the like. Further, the technique disclosed herein can also be applied, for example, when the electrode body is a wound electrode body in which a positive electrode sheet and a negative electrode sheet are wound with a separator interposed therebetween and molded into a flat shape.

FIG. 2 is a plan view schematically showing the unit cell 10 included in the battery pack 1. As shown in FIG. 2, the unit cell 10 generally includes the electrode body 20 and an exterior body 18 accommodating the electrode body. By arranging the electrode body 20 between a pair of laminated films and welding the outer peripheral edge portions of the laminated films to form a welded portion (not shown), an exterior body 18 accommodating the electrode body is formed.

Although detailed illustration is omitted, the electrode body 20 according to the present embodiment is formed by laminating a plurality of rectangular positive electrode sheet (that is, positive electrodes) and negative electrode sheets (that is, negative electrodes) (hereinafter, collectively referred to as "electrode sheets") with a likewise rectangular separator being interposed therebetween. Such an electrode sheet includes a current collector (that is, a positive electrode current collector and a negative electrode current collector), which is a foil-shaped metal member, and an electrode active material layer (that is, a positive electrode active material layer and a negative electrode active material layer) formed on the surface (one side or both sides) of the current collector.

In the rectangular electrode sheet according to the present embodiment, active material layer non-formation portions (positive electrode active material layer non-formation portion and negative electrode active material layer non-formation portion) where the electrode active material layer is not formed and the current collector is exposed are formed on one side edge portion in the long side direction. The electrode body 20 is formed by stacking the electrode sheets such that the positive electrode active material layer non-formation portion protrudes from one side edge portion and the negative electrode active material layer non-formation portion protrudes from the other side edge portion. Further, a core portion in which the electrode active material layers of the electrode sheets are overlapped is formed in the central portion in the long side direction of the electrode body. A positive electrode terminal connection portion in which a plurality of positive electrode active material layer non-formation portions is stacked is formed on one side edge portion in the long side direction, and a negative electrode terminal connection portion in which a plurality of negative electrode active material layer non-formed portions is stacked is formed on the other side edge portion. The positive electrode terminal 12 is connected to the positive electrode terminal connection portion, and the negative electrode terminal 14 is connected to the negative electrode terminal connection portion.

The unit cell 10 included in the battery pack 1 according to the present embodiment may be a fuel cell, an electric double layer capacitor, or a secondary battery such as a lithium ion secondary battery, a nickel hydrogen secondary battery, or a sodium ion secondary battery. When the unit cell 10 is a secondary battery, the unit cell may be, for example, a non-aqueous electrolyte secondary battery or an all-solid-state battery. In the case of a non-aqueous electrolyte secondary battery, an electrode body 20 in which an insulating separator is inserted between the electrode sheets is used, and a non-aqueous electrolytic solution is accommodated inside the exterior body 18. Meanwhile, in the case of an all-solid-state battery, an electrode body 20 in which a solid electrolyte layer (corresponding to a separator) is inserted between electrode sheets is used. As the members constituting the battery (specifically, electrode sheet, separator, electrode terminal, solid electrolyte layer, non-aqueous electrolytic solution, and the like), those that can be used for this type of secondary battery can be used without particular limitation. Further, the unit cell 10 can be manufactured based on a conventionally known method for manufacturing batteries.

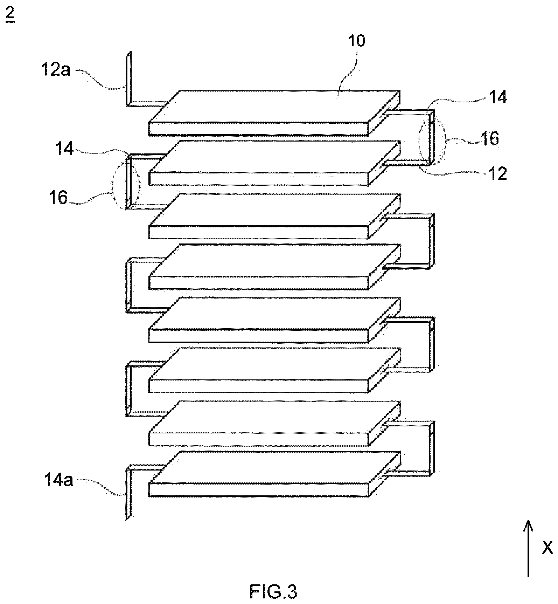

As shown in FIGS. 1 and 3, in the stacked body 2 according to the present embodiment, the positions of the positive electrode terminals 12 and the negative electrode terminals 14 in the unit cell 10 are arranged so as to be alternately reversed along the stacking direction X. Between the unit cells 10 adjacent in the stacking direction X, there is a positive-negative electrode terminal joint 16 in which portions of the positive electrode terminal 12 of one unit cell 10 and of the negative electrode terminal 14 of the other unit cell 10 are joined to each other in a bent state. As a method for joining the positive electrode terminal 12 and the negative electrode terminal 14, a conventionally known method used for joining the electrode terminals can be used without particular limitation, and examples thereof include laser welding, resistance welding, and the like. Further, although detailed illustration is omitted, a part of the positive electrode terminal 12a in the unit cell 10 present on the uppermost side in the stacking direction X and a part of the negative electrode terminal 14a in the unit cell 10 present on the most downstream side in the stacking direction are pulled out to the outside of the housing 3 for external connection.

### Housing 3

As shown in FIG. 1, the housing 3 according to the present embodiment is a hexahedral box-shaped container in which the stacked body 2 is accommodated. The housing 3 has a size sufficient to accommodate at least the stacked body 2. As a method for constructing the housing 3, for example, a method can be used in which after inserting the stacked body into a rectangular-shaped container provided with an opening for inserting the stacked body 2, the lid is superposed and sealed in the opening. Such sealing can be performed, for example, by laser welding, resin-metal adhesion with a resin, or the like.

The material constituting the housing 3 is not particularly limited as long as the effect of the technique disclosed herein is exhibited, and examples thereof include aluminum, an alloy mainly composed of aluminum, an iron-aluminum (Fe-Al) alloy, stainless steel, nickelplated steel, and the like. Among these, aluminum or an alloy mainly composed of aluminum can be preferably used from the viewpoint of small weight and excellent heat radiation property. Here, the aluminum may include various metallic elements, non-metallic elements and the like as unavoidable impurities. In this case, the purity of aluminum (that is, the content of aluminum component in aluminum) may preferably be 95% or more, 97% or more, and 99% or more (for example, about 99.5% or 99.8%). Further, the above-mentioned "alloy mainly composed of aluminum" means that among the components constituting the alloy, the component contained most in terms of weight is aluminum. Such an alloy may preferably contain 90% by weight or more, 95% by weight or more, or 99% by weight or more of aluminum. Examples of components other than aluminum include copper (Cu), magnesium (Mg), manganese (Mn), silicon (Si), zinc (Zn), and various other metal components.

### Heat Radiating Member 4

As shown in FIG. 1, the heat radiating member 4 according to the present embodiment is arranged in contact with the entire surface of the two inner walls of the housing 3. Further, the heat radiating member 4 according to the present embodiment has a rectangular sheet shape. By arranging the positive-negative electrode terminal joints 16 (in this embodiment, the positive electrode terminal 12a and the negative electrode terminal 14a) so as to be in contact with the heat radiating member 4 arranged in this way, the heat generated from the electrode terminals can be efficiently dissipated through the heat radiating member 4 and the housing 3. Further, in addition to this effect, the positive-negative electrode terminal joints 16 (in this embodiment, the positive electrode terminal 12a and the negative electrode terminal 14a) are physically in contact with the housing 3 with the heat radiating member 4 interposed therebetween, whereby the resonance frequency thereof is increased, such that the vibration resistance of the battery pack 1 can be improved.

The heat radiating member 4 has an insulating property and thermal conductivity. Here, the "having an insulating property" means having a property that electricity is unlikely to be conducted, and a volume resistivity measured based on, for example, JISK6911:2006 is typically 1.0 × 10¹⁰ Ω · cm or more and preferably can be 1.0 × 10¹² Ω · cm or more, but it is not limited to this configuration. The thermal conductivity of the heat radiating member 4 measured, for example, based on JIS A 1412-1:2016 is typically 0.5 W/m · K or more, preferably 1.5 W/m · K or more, and more preferably 3.0 W/m · K or more, but these ranges are not limiting.

The material constituting the heat radiating member 4 is not particularly limited as long as the effects of the technique disclosed herein are exhibited, and examples thereof include a resin such as a silicone resin and ceramic materials such as alumina (Al₂O₃), magnesia (MgO), silica (SiO₂), berillia (BeO), zirconia (ZrO₂), boron nitride (BN), aluminum nitride (AlN), silicon nitride (Si₃N₄), boehmite (AIOOH), and the like. These materials can be used alone or in combination of two or more as appropriate.

Further, as a material constituting the heat radiating member 4, for example, a material including a resin matrix having an insulating property and a filler having thermal conductivity can be preferably used. Examples of the resin matrix include silicone resins, polycarbonates (PC), polybutylene terephthalate (PBT), polyamides (PA), polyamideimides (PAI), polyimides (PI), polyvinyl chloride (PVC), polyurethanes (PU), polyethersulfone resins (PES), acrylonitrile styrene acrylate resins (ASA), polyphenylene sulfides (PPS), polyether ether ketone (PEEK), polypropylene (PP), polyethylene (PE), polystyrene (PS), polyoxymethylene (POM), acrylic resins (PMMA), ABS resins, phenol resins (PF), epoxy resins (EP), unsaturated polyesters, nylon, and the like, and these can be used alone or in combination of two or more as appropriate. Further, examples of the filler member include ceramic materials as described above, and these can be used alone or in combination of two or more as appropriate. Among these, an insulating member including a silicone resin as the resin matrix and alumina as the filler member can be preferably used from the viewpoint of excellent thermal conductivity. It is preferable that the blending amounts of the resin matrix and the filler member be adjusted, as appropriate, according to the types of the resin matrix and the filler member.

The thermal conductivity and thickness of the heat radiating member 4 (here, the distance from the inner wall in contact with the heat radiating member 4 to the positive-negative terminal joint 16) and the like can be determined, as appropriate, by conducting preliminary tests. Further, although it is not intended to be interpreted in a limited manner, for example, when the battery pack 1 includes eight unit cells 10 having a capacity of about 200 × 3.7 Wh, the heat radiating member 4 having a volume resistivity of about 1.0 × 10¹² Ω · cm, a thermal conductivity of about 1.0 W/m · K, and a thickness of about 8.0 mm can be used.

A method for arranging the heat radiating member 4 on the inner wall of the housing 3 is not particularly limited as long as the effect of the technique disclosed herein is exhibited, and examples of suitable methods include a method of applying and arranging an adhesive on an arrangement surface of the heat radiating member 4, a method of using and arranging a heat radiating member 4 having adhesiveness in advance, a method of coating a paste-like (including ink-like and slurry-like) heat radiating member raw material on the desired inner wall of the housing 3 and drying to form the heat radiating member 4, and the like. When an adhesive is applied to the arrangement surface of the heat radiating member 4, it is preferable that the adhesive be applied to such an extent that the formed adhesive layer does not hinder heat conduction.

### Heat Exchanger 5

As shown in FIG. 1, the heat exchanger 5 according to the present embodiment is provided on the outer side of the housing 3 where the heat radiating member 4 is arranged. The type of such heat exchanger is not particularly limited as long as the effects of the technique disclosed herein are exhibited, and for example, a multi-tube heat exchanger (shell & tube heat exchanger; a plurality of thin circular pipes (tubes) is arranged in a thick cylindrical pipe (shell) and heat exchange is performed by allowing fluids with different temperatures to flow inside and outside the tubes), a plate type heat exchanger (metal plates (plates) pressed to have a concavo-convex shape are stacked and heat exchange is performed by allowing fluids with different temperatures to flow alternately therebetween), a fin-tube heat exchanger (a liquid medium is allowed to flow inside a circular pipe (tube), and heat exchange is performed by allowing a gas to flow on the outside of the tube and on the fins), and various other heat exchangers can be adopted. Such arrangement of the heat exchanger 5 is preferable because the heat generated from the positive-negative electrode terminal joints 16 (in the present embodiment, also the positive electrode terminals 12a and the negative electrode terminals 14a) can be more effectively dissipated.

### Method for Constructing Battery Pack 1

A method for constructing the battery pack 1 according to the present embodiment will be described hereinbelow, but a method for constructing the battery pack 1 is not intended to be limited to the following method. In addition, the order of steps in the following construction method can be changed as appropriate.

First, as shown in FIG. 3, a plurality of unit cells 10 (eight in this case) is prepared and stacked along the stacking direction X. Subsequently, positive-negative electrode terminal joints 16 (here, seven joints) are formed between the unit cells 10 adjacent along the stacking direction X by joining the positive electrode terminal 12 of one unit cell 10 and the negative electrode terminal 14 of the other unit cell 10 by laser welding in a bent state. Here, the positive electrode terminal 12a of the unit cell 10 on the most downstream side in the stacking direction X and the negative electrode terminal 14a of the unit cell 10 on the most upstream side in the stacking direction are left without performing such joining for external connection.

Subsequently, a box-shaped container having an opening for inserting the stacked body 2 is prepared. Then, the rectangular sheet-shaped heat radiating member 4 is arranged so as to be in contact with the entire surfaces of the two inner walls of the container. In the present embodiment, in such an arrangement, an adhesive is applied to the arrangement surface of the heat radiating member 4 and adhered to the inner walls in the container.

Next, the stacked body 2 produced as described above is inserted into the container in which the heat radiating member 4 has been arranged. At the time of such insertion, the seven positive-negative electrode joints 16, the positive electrode terminal 12a and the negative electrode terminal 14a provided in the stacked body 2 are brought into contact with the heat radiating member 4 in the container. At this time, a part of the positive electrode terminal 12a and a part of the negative electrode terminal 14a are pulled out from the container in which the heat radiating member 4 is arranged for external connection.

Then, a lid for sealing the opening is superposed on the opening of the container including the stacked body 2, and the periphery of the opening is welded and sealed by laser welding. Finally, the battery pack 1 can be constructed by installing the heat exchanger 5 on the outer side of the housing 3 where the heat radiating member 4 has been arranged.

### Modification Example

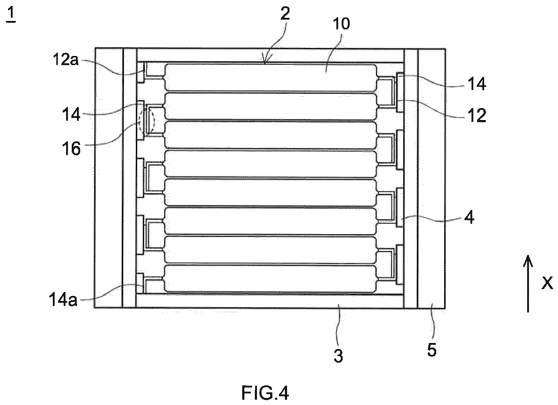

A specific example of the battery pack (method for constructing the battery pack) disclosed herein has been described in detail with reference to the battery pack 1, but the battery pack disclosed herein is not limited to such a specific example. The battery pack disclosed herein is inclusive of various modifications of the above-mentioned specific example as long as the purpose thereof is not changed. Hereinafter, modification examples (i) to (v) of the battery pack 1 will be described.
(i) In the above embodiment, the heat radiating member 4 is arranged in contact with the entire surface of the two inner walls of the housing 3, but the present disclosure is not limited to this configuration. The heat radiating member 4 may be provided, for example, only on the minimum necessary portion of the two inner walls of the housing 3. Further, in the above embodiment, the heat radiating member 4 is arranged for the positive electrode terminal 12a and the negative electrode terminal 14a in addition to the positive-negative electrode terminal joints 16, but the present disclosure is not limited to this configuration. For example, the heat radiating member 4 may be arranged only on one of the positive electrode terminal 12a and the negative electrode terminal 14a in addition to the positive-negative electrode terminal joints 16. As a matter of course, the effect of the technique disclosed herein can be exhibited in a mode in which the heat radiating member 4 is arranged at least for the positive-negative terminal joints 16, and therefore the heat radiating member may be arranged only for the positive-negative terminal joints (the same applies to (ii) below).
(ii) In the above embodiment, the heat radiating member 4 is continuously arranged along the stacking direction X, but the present disclosure is not limited to this configuration. For example, heat radiating members 4 may be arranged as shown in FIG. 4. Further, in this case, the size and shape of each heat radiating member 4 may be different as long as the effect of the technique disclosed herein is exhibited.
(iii) In the above embodiment, the rectangular sheet-shaped heat radiating member 4 is used, but the heat radiating member 4 is not limited to this shape, and may have various shapes such as a rhombus and an ellipse. Further, in the above embodiment, the sheet-shaped heat radiating member 4 is used, but the present disclosure is not limited to this shape, and for example, a block-shaped heat radiating member may be used.
(iv) In the above embodiment, the case where the battery pack 1 is provided with the heat exchanger 5 is described, but as a matter of course, the effect of the technique disclosed herein also can be obtained when the battery pack 1 is not provided with the heat exchanger 5.
(v) In the above embodiment, the unit cell 10 in which the positive electrode terminal 12 is arranged on one short side of the exterior body 18, and the negative electrode terminal 14 is arranged on the side facing the one short side is used, but such a configuration is not limiting. For example, a unit cell in which the positive electrode terminal 12 and the negative electrode terminal 14 are arranged on one short side or long side of the exterior body 18 can also be used. In such a case, the heat radiating member 4 may be provided on the inner wall on one side of the housing 3.

The battery pack 1 disclosed herein can be used for various purposes. An example of a suitable application is a drive power source mounted on a vehicle such as a battery electric vehicle (BEV), a hybrid electric vehicle (HEV), or a plug-in hybrid electric vehicle (PHEV). Among them, the battery pack can be preferably used particularly in a battery electric vehicle (BEV).

## Claims

1. A battery pack (1) comprising:
a stacked body (2) in which a plurality of unit cells (10) is stacked along a predetermined stacking direction; and
a housing (3) accommodating the stacked body (2), wherein:
the unit cell (10) includes:
an electrode body (20) including a first electrode which is either a positive electrode or a negative electrode; and
a second electrode which is a counter electrode of the first electrode, and an exterior body (18) accommodating the electrode body (20), and
a first electrode terminal and a second electrode terminal electrically connected to the first electrode and the second electrode, respectively, are arranged outside the exterior body (18),
a heat radiating member (4) having an insulating property and thermal conductivity is arranged on an inner wall of the housing (3) in contact with the inner wall of the housing (3), wherein:
an electrode terminal joint in which either the first electrode terminal or the second electrode terminal of one unit cell is joined to either the first electrode terminal or the second electrode of the other unit cell is present between the unit cells adjacent in the stacking direction, and
the electrode terminal joints are in contact with the heat radiating member (4).

2. The battery pack (1) according to claim 1, wherein:
the exterior body (18) has a pair of rectangular wide surfaces, and
the first electrode terminal is arranged on one short side or long side of the wide surface, and the second electrode terminal is arranged on the side facing the one short side or long side.

3. The battery pack (1) according to claim 1 or 2, wherein:
the heat radiating member (4) includes:
a resin matrix having an insulating property; and
a filler member having thermal conductivity.

4. The battery pack (1) according to claim 3, wherein:
the resin matrix includes a silicone resin and the filler member includes alumina.

5. The battery pack (1) according to any one of claims 1 to 4, wherein:
the housing (3) is configured of aluminum or an alloy mainly composed of aluminum.

6. The battery pack (1) according to any one of claims 1 to 5, wherein:
a heat exchanger (5) is provided on the outer side of the inner wall on which the heat radiating member (4) is arranged in the housing (3).

7. The battery pack (1) according to any one of claims 1 to 6, wherein:
the exterior body (18) is made of a laminated film.
